# EUROPEAN PATENT APPLICATION

(11) **EP 0 551 215 A1**
(43) Date of publication of application: **14.07.1993**
(21) Application number: 93300143.0
(22) Date of filing: 11.01.1993
(51) Int. Cl.: A01C 15/04

(54) **Apparatus for the entrainment of particulate material in an air stream**

(30) Priority: 09.01.1992 US 818525
(71) Applicant: FLEXI-COIL LIMITED, Saskatoon Saskatchewan S7K 3S5 (CA)
(72) Inventor: Memory, Russell James, Saskatoon, Sask S7K 4Y8 (CA); Beckers, Joannes A.L., Dalmeny, Sask S0K 2EO (CA)
(74) Representative: W.P. Thompson & Co.

(57) **Abstract**

The present specification discloses an apparatus for entraining particulate materials, including seed and/or fertilizers, in a conveying air stream of an agricultural seeder. The apparatus combines the accelerating force of gravity on the particulate material being metered out by the seeder, with the downward vertical component of velocity of the entraining air stream to bring the particles to the required conveying velocity. This is achieved by having the air stream moving in a predominantly downward direction when it meets and mixes with the particulate material descending by gravity.

## Description

The present invention relates to apparatus for the entrainment of particulate material in an air stream for conveyance to a distribution point.

More particularly, the present invention relates to agricultural air seeders, and more particularly to the blending of air and particulate feed streams where the particulate material, for example seeds or fertilizer particles or both, is entrained in an air stream and conveyed to one or more, usually a plurality of, distribution points. In modern large air seeders the air stream with entrained particles is usually subdivided at the aforesaid distribution point into a plurality of smaller streams, as is well known in the art. Also, as is well known in the art, the particulate material is dispensed from a storage bin on the air seeder by a metering device, most commonly a horizontally aligned fluted metering roller whose speed of rotation can be varied to vary the rate at which the particulate material is dispensed from the storage bin into an entraining stream of air. It is known also that rollers with different sizes or depths of flutes are used to accommodate particles of different sizes.

Irrespective of the design of the metering device, the metering devices on known air seeders all appear to dispense the particulate matter in a manner to permit it to fall by gravity into an air stream moving horizontally at a velocity sufficient to entrain the particles and carry them to distribution points and points of application. It has now been observed that this arrangement of entraining the vertically descending particles in a horizontally moving air stream is inefficient with respect to the power required to maintain the air stream and to entrain the particles effectively.

An aim of the present invention is to improve the entraining of particles, dispensed, for example, by metering devices of air seeders, into the air streams that convey said particles to distribution points and points of application.

According to the present invention there is provided apparatus for entrainment of particulate material in an air stream for conveyance to a point of distribution, characterised by metering means for dispensing said particulate material at a controlled rate from a storage bin into said air stream for entrainment, means for directing the air stream generally in a direction having a substantial vertical downward component in the area of and immediately downstream of said metering means, means to enable substantial vertical acceleration of the said particulate material by gravity immediately downstream of said metering means, and means to combine the particulate material into the air stream and convey it at a conveying velocity to a point of distribution.

The apparatus of the present invention combines the accelerating force of gravity on the particulate material, being metered out by, for example, a seeder, with the downward vertical component of velocity of the entraining air stream to bring the particles to the required conveying velocity. This is achieved by having the air stream moving in a predominantly downward direction when it meets and mixes with the particulate material descending by gravity.

According to a further feature of the present invention there is provided apparatus for blending particulate material into an air stream for entrainment thereby and conveyance to points of distribution and application, said apparatus comprising:
a) a metering device for dispensing said particulate material at a controlled uniform rate from a storage bin into a meter discharge outlet in which it descends by gravity,
b) a means to supply air under controlled uniform pressure to an air chamber adjacent and beside said meter discharge outlet, with an air outlet at the bottom of said chamber, said air chamber being separated from said meter discharge outlet by an air impervious partition, and the bottom edges of said meter discharge outlet and air chamber outlet terminating at a common level,
c) an air duct having an inlet end attached to and covering said meter discharge outlet and air chamber outlet, said air duct being adapted to receive said particulate matter and air travelling downwardly, then blend and convey them on a smoothly curved path to a distribution or application point.

The present invention will now be further described, by way of example, with reference to the accompanying drawings, in which:-
Fig.1 shows a side elevation of a typical two tank air seeder in which the present invention is used;
Fig.2 is an enlargement of a portion of Fig.1 showing in closer detail the location on the air seeder of Fig.1 where the present invention is incorporated;
Fig.3 is an enlargement of a portion of Fig.2 showing details of the means for the blending and mixing of feed streams of air and particulate material utilising the present invention;
Fig.4 is a cross-sectional view of a means as depicted in Fig.3, viewed from the opposite side of the seeder of Fig.1; and
Fig.5 is a top view, partly in section, of an alternative embodiment of the present invention, wherein three air duct outlets are connected in parallel to a single metering roller.

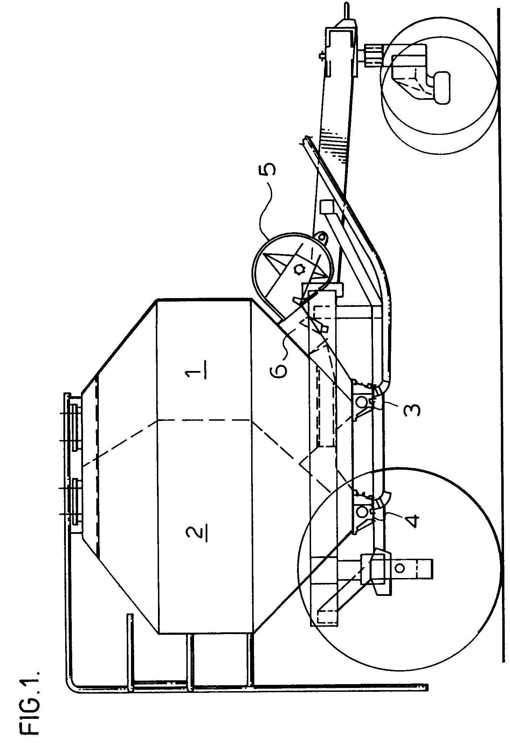

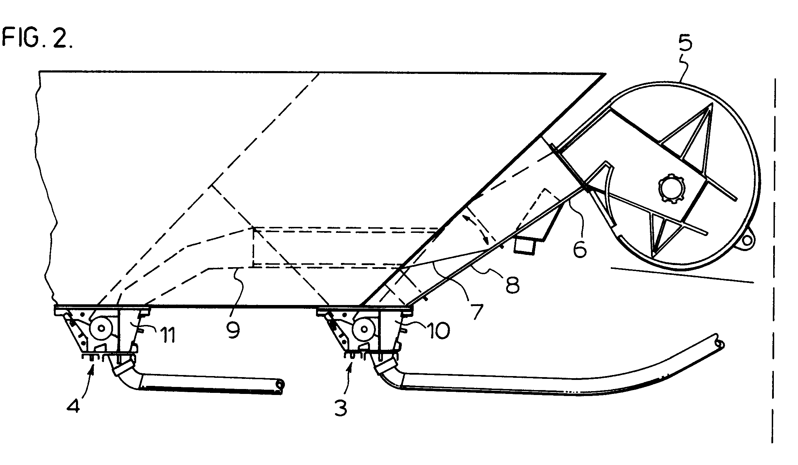

In Fig.1 of the accompanying drawings, reference numerals 1 and 2 indicate the two storage tanks of a typical two-tank seeder which, as is well known in the art, can simultaneously dispense either one or both of seeds and particulate fertilizer, from their respective tanks, through metering devices 3 and 4, into air streams which entrain the particles through conduits and inject them into furrows created by a preceding or following implement. A blower or fan 5 generates a stream of air through an air outlet 6. In outlet 6 (see Fig.2), a flap valve 7 is provided which is arranged to direct the air stream, by the selective positioning of the valve, into one or other or both of conduits 8 and 9 leading to flow equalising air chambers 10 and 11 respectively of adjacent metering devices 3 and 4 respectively. These chambers 10,11 extend the entire axial length of metering rollers provided in the metering devices 3,4 and serve as means to direct the air streams in a generally downward direction having a substantial vertical component in the area of, and immediately downstream of, the respective metering devices.

Optionally and preferably, conduits 8 and 9 are each formed with two input air lines (not shown), each pair of which provides an air inlet to chambers 10 and 11 respectively, but at opposite ends thereof.

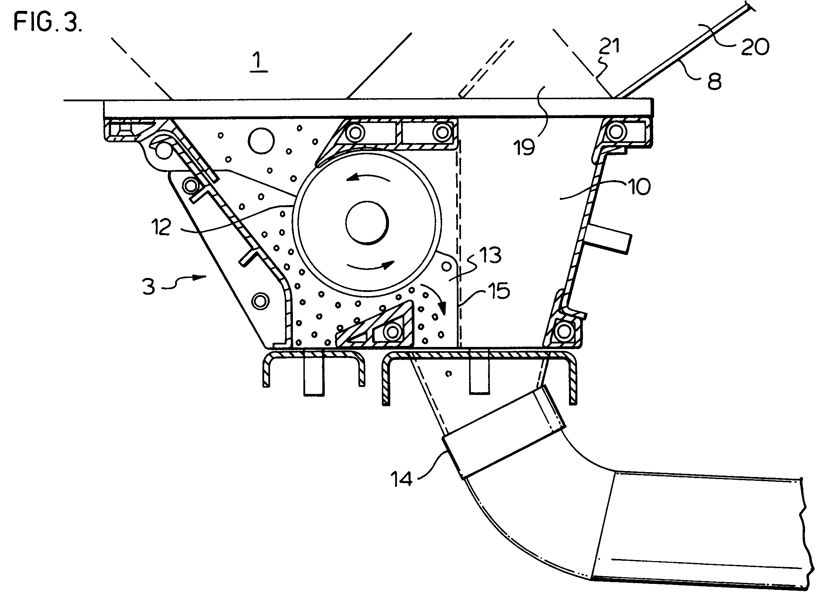

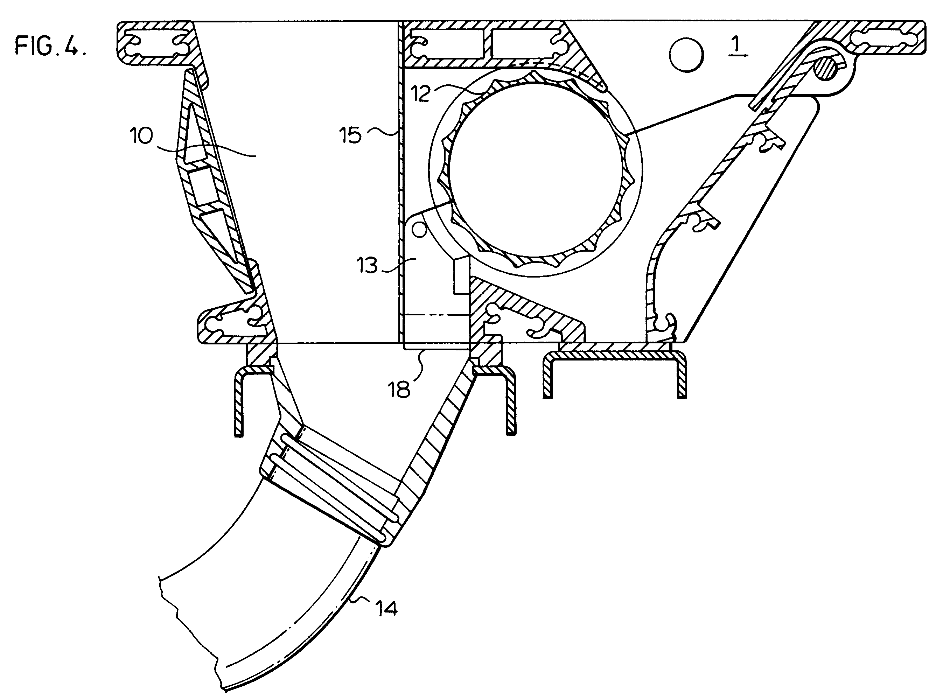

Turning now to Fig.3, the metering device 3 at the bottom of tank 1 has a conventional rotating metering roller 12. Any conventional metering roller or equivalent device can be used. The metering roller 12 is rotated in the direction shown by arrows to dispense seed or other granular material from the bottom of the tank 1 at a controlled rate and to discharge the seed or other granular material through a meter discharge outlet 13 under the effect of gravity; the vertical dimension of the meter discharge outlet 13 serving as a means to enable substantial vertical acceleration of the particulate material by gravity immediately downstream of the metering device. The seed or other granular material is thus discharged under gravity, as is conventional, into the opening of an air duct 14, which is fastened, preferably detachably, to cover both the discharge outlet 13 and the open bottom of air chamber 10. A preferably impervious divider wall or barrier 15, as shown in Figures 3 and 4, separates air chamber 10 from meter discharge outlet chamber 13 and maintains the seed or other granular material feed stream separate from the air stream until they both have entered the air duct 14 travelling substantially parallel in a downward direction. Immediately below the entrance to air duct 14, the duct 14 curves smoothly from a generally vertical direction to a generally horizontal direction, thus diverting the direction of flow of both the air stream and the entrained seed or other granular material from the vertical to the horizontal as the two streams blend together in duct 14. The immediate change of direction minimizes the amount of clearance above ground level required for the metering device 3 to preclude clearance problems for the ensuing horizontal run of duct 14 which runs to a distribution point on an auxiliary unit behind or ahead of the seeder.

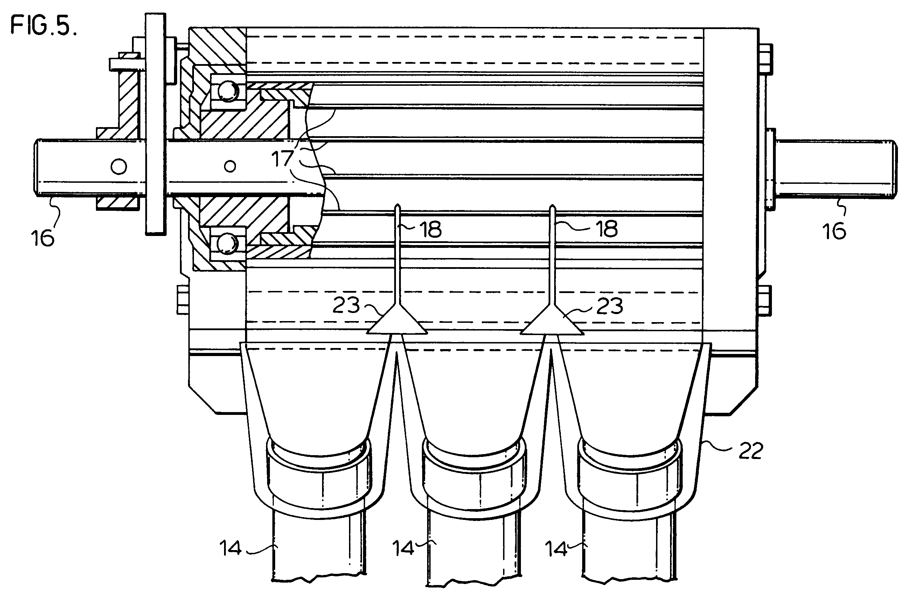

Fig.5 shows a metering roller having a shaft 16, the surface of the roller having axially extending flutes 17 between which seed or other particulate material is discharged as the roller rotates on the shaft 16, to fall by gravity into the inlets of three air ducts 14, each air duct being connected in parallel to the bottom of a common meter discharge outlet and its adjacent common air chamber by a manifold 22. The manifold 22 and air ducts 14 serve as means to segregate the air stream into a plurality of respective outlet air streams, and by being connected in parallel to the bottom of a common meter discharge outlet, they serve further as means to combine respective portions of the particulate material with respective separate outlet air streams and convey these respective portions at conveying velocity to respective points of distribution.

In the arrangement illustrated by Fig.5, the plurality of air ducts 14 are fed simultaneously by a single metering roller and the adjacent air chamber, each air duct leading to its respective distribution point for further subdivision of the air stream from its entrained particles. The number of air ducts need not be limited to the illustrated three ducts, but regardless of the number, the particles to be entrained in each air duct and the air to entrain these particles, must both be moving substantially vertically downwards as they enter the inlet of the air duct.

To assist in separating the flow of particulate material, which descends like a curtain from the metering roller, it is preferred to have a plurality of vertically disposed separator plates 18, (see Figs. 4 and 5), spaced horizontally along the length of the metering roller, in the meter discharge outlet chamber 13. Preferably each of these separator plates 18 extends across substantially the whole of the vertical cross-section of the discharge chamber 13 at right angles to the metering roller, and optionally they extend slightly below the meter discharge outlet into manifold 22. The separator plates 18 separate the particulate material into respective portions for each of the air ducts 14. Horizontal adjustment of the separator plates 18 along the length of the metering roller is preferably provided to assist in even distribution of particulate material among the air ducts 14. Further, the separator plates 18 are preferably provided with deflectors 23 along at least a portion of their lowermost extremities.

Under the conditions indicated immediately above, the particles, as they enter the air ducts, are accelerating under the force of gravity, and at the same time the force of the stream of air also entering the air duct simultaneously with and substantially parallel to the direction of the particles, further accelerates them until they achieve a conveying velocity. On achieving the said conveying velocity, the particles are fully entrained.

In order to achieve the desired vertical downward direction of the air stream entering each duct of a plurality of air ducts, as described hereabove, it is preferred that the air in the air chamber 10 be travelling in a predominantly downward direction as it moves through chamber 10 i.e. that horizontal or random movement of the air through the air chamber 10 be kept as low or as small as possible and that its path not vary more than 45 degrees from the vertical, preferably not more than 30 degrees, most preferably not more than 15 degrees. As an aid to this desideratum, chambers 10 and 11 may extend upstream of barrier 15, as at 19 in Fig.3. The upstream extension 19 may be divided into a second equalising chamber 20 by a horizontally extending perforated partition 21. As a further aid to this desideratum, it is preferred that air from air chamber 10 not flow laterally into meter discharge outlet 13, where it could divert the accelerating downward motion of the particles falling from the metering roller 12. Hence it is preferred that barrier 15 be impervious and separate air chamber 10 from the meter discharge inlet down to the level where both air from chamber 10 and particles discharged by the metering roller, enter the air duct 14.

As a further aid to uniform entrainment of particles discharged by a metering roller into a plurality of air ducts, it is preferred that the direction of rotation of the metering roller be such that particles are discharged from the bottom of the roller, rather than over the top of the roller, as they fall into the discharge outlet 13.

When it is desired to operate an air seeder equipped with the present invention, but utilizing fewer than the full number of multiple air ducts thereon, it is a simple matter to change the metering roller so that it discharges particles only into those air ducts which it is desired to use, and to plug the other ducts at their inlets with simple plugs to prevent air from chamber 10 entering those other ducts.

Numerous modifications can be made in the various expedients described without departing from the invention disclosed herein, its scope being defined in the following claims.

## Claims

1. Apparatus for entrainment of particulate material in an air stream for conveyance to a point of distribution, characterised by metering means (12) for dispensing said particulate material at a controlled rate from a storage bin (1,2) into said air stream for entrainment, means (10,11) for directing the air stream generally in a direction having a substantial vertical downward component in the area of and immediately downstream of said metering means (12), means (13) to enable substantial vertical acceleration of the said particulate material by gravity immediately downstream of said metering means (12), and means (14) to combine the particulate material into the air stream and convey it at a conveying velocity to a point of distribution.

2. Apparatus as claimed in claim 1, wherein said means (13) for producing substantial vertical acceleration of the particulate material includes a discharge chamber (13) adapted to limit the influence in the chamber (13) upon the particulate material by said air stream, wherein the particulate material accelerates under the influence of gravity.

3. Apparatus for entrainment of particulate material in an air stream for conveyance to a point of distribution, characterised by metering means (12) for dispensing said particulate material disposed in the form of a curtain at a controlled rate from a storage bin (1,2) into said air stream for entrainment, comprising an elongate metering roller (12) arranged with its longitudinal axis substantially horizontal,
a plurality of vertically disposed separator means (18) spaced horizontally along the length of the said metering roller (12),
means (10,11) for directing the air stream generally in a direction having a substantial vertical downward component in the area of and immediately downstream of said metering means (12),
means (13) to enable substantial vertical acceleration of the said particulate material by gravity immediately downstream of said metering means (12),
said metering roller (12) being located above the means (13) for producing substantial vertical acceleration, and
means (14) to combine the particulate material into the air stream and convey it at a conveying velocity to a point of distribution.

4. Apparatus as claimed in claim 3, wherein said means (13) for producing substantial vertical acceleration of the particulate material includes a discharge chamber (13) adapted to prevent any substantial influence in the chamber (13) upon the particulate material by said air stream, wherein the particulate material accelerates under the influence of gravity.

5. Apparatus as claimed in claim 4, wherein the discharge chamber (13) is segregated from said air stream by a barrier (15).

6. Apparatus as claimed in claims 3 to 5, wherein said vertically disposed separator means comprise separator plates extending across substantially the whole of the vertical cross-section of the said discharge chamber (13).

7. Apparatus as claimed in claim 6, wherein the means (10) for directing the air stream generally in a direction having a generally vertical downward component comprises a flow equalising chamber (10) for said airstream located adjacent to said metering means (12).

8. Apparatus as claimed in claim 7, wherein outlet means are provided for separating the air stream into a plurality of respective outlet air streams comprising a manifold (22) adjacent the discharge chamber (13) adapted to smoothly receive both of the particulate material from the discharge chamber (13) and the air stream, and to segregate the stream into multiple outlet air ducts (14).

9. Apparatus as claimed in claim 8, wherein said separator plates (18) are horizontally placed so as to separate the particulate material into streams each corresponding to a respective outlet line.

10. Apparatus as claimed in claim 9, wherein the said separator plates (18) are horizontally adjustable so as to adjust the relative amount of particulate material in each corresponding outlet line.

11. Apparatus as claimed in claim 10, wherein said separator plates (18) further comprise deflector means (23) at their lowermost extremity adapted to centre the corresponding stream of particulate material.

12. Apparatus for blending particulate material into an air stream for entrainment thereby and conveyance to points of distribution and application, said apparatus comprising
a horizontally disposed metering device (12) for dispensing said particulate material at a controlled uniform rate in the form of a curtain from a storage bin (1,2) into a meter discharge outlet (13) in which it descends by gravity,
a plurality of vertically disposed separator means (18) spaced horizontally along the length of the said metering device (12) in said meter discharge outlet (13),
a means to supply air under controlled uniform pressure to an air chamber (10,11) adjacent and beside said meter discharge outlet (13), with an air outlet at the bottom of said chamber (10,11);
said air chamber (10,11) being separated from said meter discharge outlet (13) by an air impervious partition (15), and the bottom edges of said meter discharge outlet and air chamber outlet terminating at a common level, and an air duct (14) having a plurality of air chamber outlets disposed adjacent said separator plates,
said air duct (14) being adapted to receive said particulate matter and air travelling downwardly, then blend and convey them on a smoothly curved path to distribution or application points.

13. Apparatus as claimed in claim 12, wherein the air chamber (10,11) is adapted to direct an air stream therethrough in a predominantly downward direction having a substantial horizontal component that varies not more than 45 degrees from the vertical.
